# EUROPÄISCHE PATENTSCHRIFT

(11) **EP 2 113 452 B1**
(45) Veröffentlichungstag und Bekanntmachung des Hinweises auf die Patenterteilung: **07.11.2018**
(21) Anmeldenummer: 09002614.7
(22) Anmeldetag: 25.02.2009
(51) Int. Cl.: B62D 65/18

(54) **Fertigungslinie zur Herstellung von Kraftfahrzeugen**
Production line for production of motor vehicles
Ligne de fabrication destinée à la production de véhicules automobiles

(30) Priorität: 30.04.2008 DE 102008022560
(43) Veröffentlichungstag der Anmeldung: 04.11.2009
(73) Patentinhaber: Dr. Ing. h.c. F. Porsche AG, 70435 Stuttgart (DE)
(72) Erfinder: Krüger, Detlef, 04229 Leipzig (DE); Birnstiel, Michael, 04277 Leipzig (DE); Schulze, Hans-Joachim, 29392 Wesendorf (DE); Meyer, Christian, 04435 Schkeuditz (DE); Maschmeier, Horst, 32289 Rödinghausen (DE)

(56) Entgegenhaltungen:
- DE-A1- 10 350 846
- DE-U1- 20 118 898
- GB-A- 2 352 838
- JP-A- 4 354 632
- JP-A- 9 142 643
- JP-A- 60 047 775
- JP-A- 2000 343 352
- JP-A- 2002 265 038

## Beschreibung

Die Erfindung betrifft eine Fertigungslinie zur Herstellung von Kraftfahrzeugen in einer geplanten Ausbringungsreihenfolge mit mindestens einer Entkopplungsstation und mindestens einem Zwischenspeicher zwischen den Fertigungsstationen, wobei wechselweise eine Vielzahl erster Karossen und eine Vielzahl zweiter Karossen von einer Entladestation oder einer Montagelinie in ein Entkopplungsmodul eingeschleust werden, in dem Gassenspeicher vorgesehen sind, in denen die ersten und die zweiten Karossen voneinander getrennt in einer zur Ausbringungsreihenfolge korrespondierenden Montagereihenfolge zwischengepuffert sind.
Aus dem Serienfahrzeugbau ist es bekannt, Fahrzeuge unterschiedlicher Modellreihen auf ein und derselben Fertigungslinie zu fertigen bzw. zusammenzuführen. Innerhalb der Fertigungslinie werden in der Regel unterschiedliche Fördermittel eingesetzt. So ist es üblich, Karossen auf Gestellen, Schubplatten oder Hängewagen zu transportieren. Die Auswahl des jeweiligen Fördermittels hängt von den Arbeiten ab, die an den einzelnen Arbeitsstationen jeweils an der Karosse vorgenommen werden sollen. So werden beispielsweise Hängewagen eingesetzt, wenn Arbeiten unter der Karosse durchgeführt werden; es werden Schubplatten eingesetzt, um beispielsweise Arbeiten im Innenraum durchzuführen. Gestelle werden häufig eingesetzt, wenn Karossen von einer Arbeitsstation zu einer anderen Arbeitsstation längere Strecken überbrückt werden sollen.

Grundsätzlich ist es aus der gattungsgemäßen GB 2 352 838 A bekannt ein Entkopplungsmodul mit einem Zwischenspeicher vorzusehen, in dem Fahrzeuge zeitlich begrenzt aufgenommen und bearbeitet werden, um diese nachfolgend der Fertigungslinie wieder zu zu führen.
Beim Fertigen von Fahrzeugen unterschiedlicher Modellreihen kann es darüber hinaus vorkommen, dass sich diese in der Bodenstruktur und damit in den Aufnahmepunkten für die Fördermittel unterscheiden. Um die unterschiedlichen Aufnahmepunkte auszugleichen, werden Adapter zwischen der Karosse und dem Fördermittel angeordnet.

Die Aufgabe der Erfindung besteht darin, eine Fertigungslinie zur Herstellung von Kraftfahrzeugen zu schaffen, mit der es möglich ist, dass sequenziell angelieferte, Karossen, die an verschiedenen Produktionsstandorten vorgefertigt wurden, aufwandsoptimiert in einer vorherbestimmten Ausbringungsreihenfolge die gemeinsame Fertigung verlassen.

Die Aufgabe wird erfindungsgemäß mit den Merkmalen des Patentanspruch 1. gelöst.

Vorteilhafte Ausgestaltungen ergeben sich aus den Merkmalen der abhängigen Ansprüche.

Der Kern der Erfindung liegt darin, dass die ersten Karossen in einer zur Ausbringungsreihenfolge korrespondierenden Montagereihenfolge in einem von den zweiten Karossen separierten Gassenspeicher zwischengepuffert sind. Die zweiten Karossen sind ebenfalls in einem eigenen Gassenspeicher untergebracht. Unter Gassenspeicher wird im Sinne der Erfindung eine Förderstrecke verstanden, auf der Karossen auf entsprechenden Fördermitteln, wie beispielsweise Gestelle, hintereinander aufgereiht gefördert werden können. D.h. die Reihenfolge der Karossen ist im Gassenspeicher nicht mehr änderbar. Es muss regelmäßig der Vorgänger einer Karosse entnommen werden, um die nächste Karosse verarbeiten zu können. Durch Ablage der Karossen in einer zur Ausbringungsreihenfolge korrespondierenden Montagereihenfolge ist es möglich, dass abwechselnd erste Karossen und zweite Karossen in die gemeinsame Fertigung eingeschleust werden können. Die Abwechslung kann dabei unregelmäßig sein. D.h. es können beispielsweise mehrere erste Karossen auf eine zweite Karosse folgen, je nach dem wie die Ausbringungsreihenfolge festgelegt ist. Da in der Fertigungslinie Karossen unterschiedlicher Baustufen verarbeitet werden sollen, ist vorgesehen, dass erste Karossen von dem Entkopplungsmodul in die Montagelinie eingespeist werden, aus der die Karossen als Karossen in einer höheren Baustufe zurück in einen eigens dafür vorgesehenen Gassenspeicher gefördert werden.

Um Bebauungsfläche zu sparen, kann das Einspeisen in die Montagelinie über einen Vertikalförderer erfolgen, wobei sich die Montagelinie in einer anderen Ebene befindet als das Entkopplungsmodul.

Ferner kann dann das Ausspeisen aus der Montagelinie zurück in das Entkopplungsmodul über einen Vertikalförderer erfolgen.

Um Unregelmäßigkeiten in der Montagereihenfolge auszugleichen, kann in dem Entkopplungsmodul ein wahlfreier Speicher vorgesehen sein, aus dem die Karossen unabhängig von ihrer Einbringungsreihenfolge entnehmbar sind.

Der wahlfreie Speicher kann hierzu zwei außenseitige Schienen umfassen, auf denen die Karossen an vorgegebenen Platzierungen abgestellt werden können. Zwischen den außenseitigen Schienen verläuft eine mittlere Schiene, auf die jede beliebige Karosse von den außenseitigen Schienen übergeben werden können.

Bei beispielsweise erhöhten Bedarfen der ersten oder der zweiten Karossen können diese über eine Bypassförderstrecke direkt von der Entladestation zur Endmontage gefördert werden.

Jeder Gassenspeicher kann mehrere Speichergassen umfassen, die durch quer verlaufende Förderstrecken miteinander verbunden sind.

Weitere vorteilhafte Ausgestaltungen der Erfindung werden im folgenden anhand der Zeichnung näher erläutert. Dabei zeigen:
- Figur 1: einen schematischen Ablauf einer Fertigungslinie,
- Figur 2: eine räumliche Anordnung der Fertigungslinie,
- Figur 3: ein Entkopplungsmodul der Fertigungslinie,
- Figur 4: eine Vorlaufstrecke der Fertigungslinie,
- Figur 5: Umsetzen eines Adapters von einem Hängewagen einer Elektrohängebahn auf eine Schubplatte in einer ersten Position,
- Figur 6: Umsetzen des Adapters vom Hängewagen auf die Schubplatte gemäß Figur 1 in einer zweiten Position,
- Figur 7: Umsetzen des Adapters vom Hängewagen auf die Schubplatte gemäß Figur 1 in einer dritten Position,
- Figur 8: Umsetzen des Adapters vom Hängewagen auf die Schubplatte gemäß Figur 1 in einer vierten Position,
- Figur 9: Umsetzen des Adapters vom Hängewagen auf die Schubplatte gemäß Figur 1 in einer fünften Position,

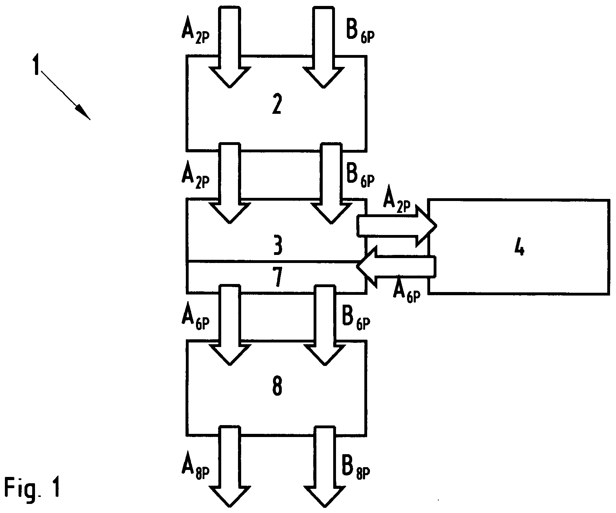

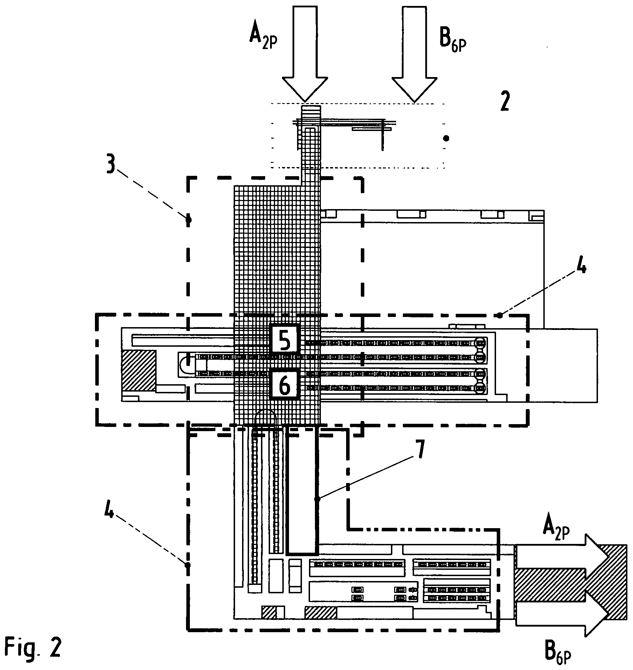

Figur 1 zeigt einen schematischen Ablauf einer Fertigungslinie 1 zur Fertigung von Personenwagen A und B auf ein und derselben Fertigungslinie. Die Bezugszeichen A und B stellen dabei Personenwagen zweier unterschiedlicher Modellreihen dar. Aus Figur 2 geht eine denkbare räumliche Anordnung der Fertigungslinie 1 hervor.

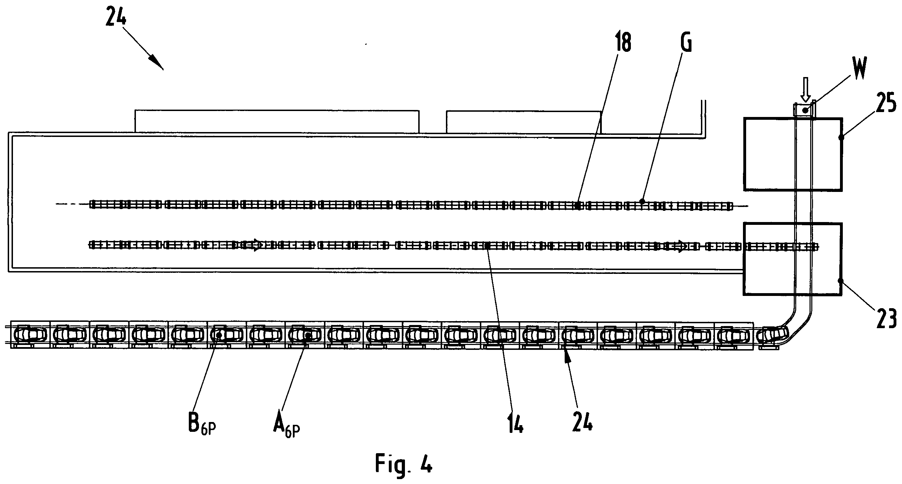

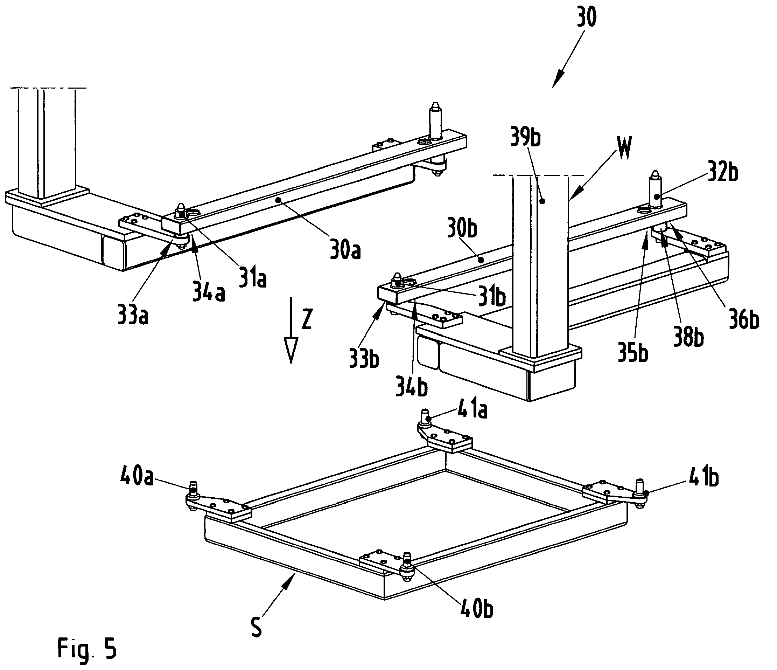

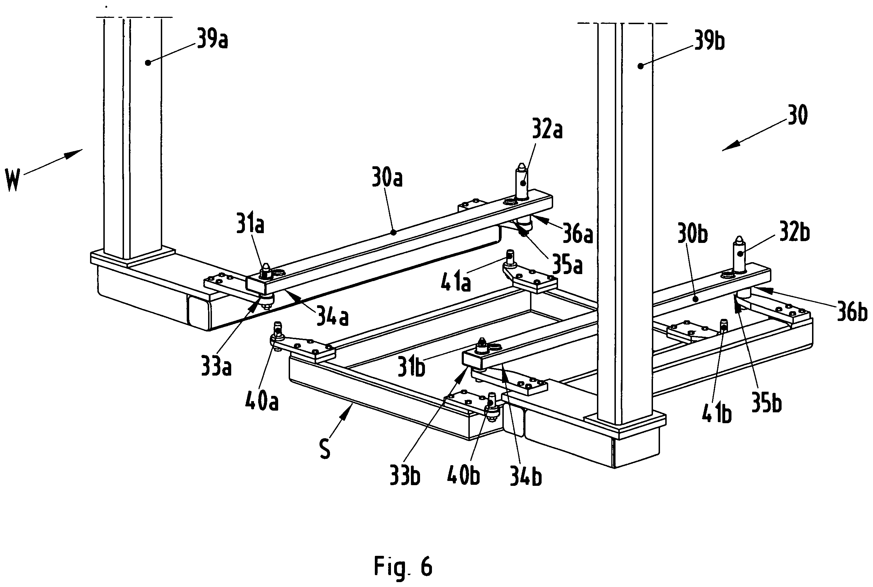

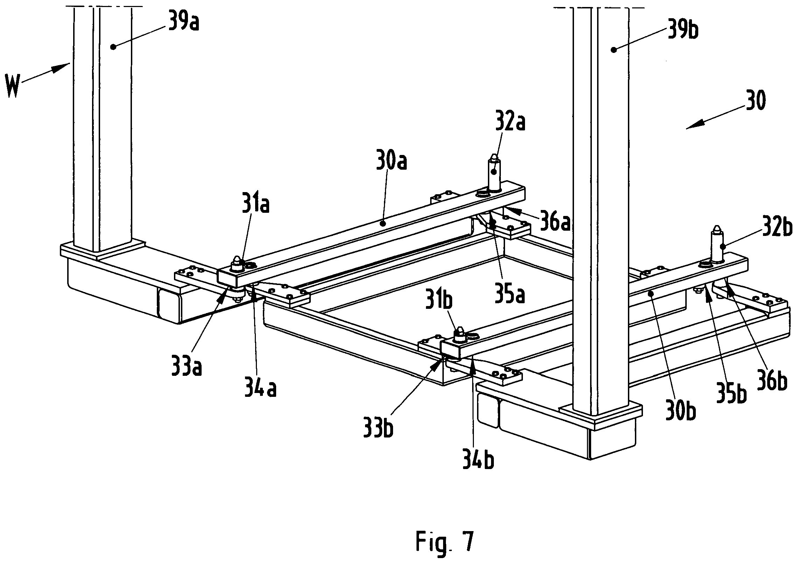

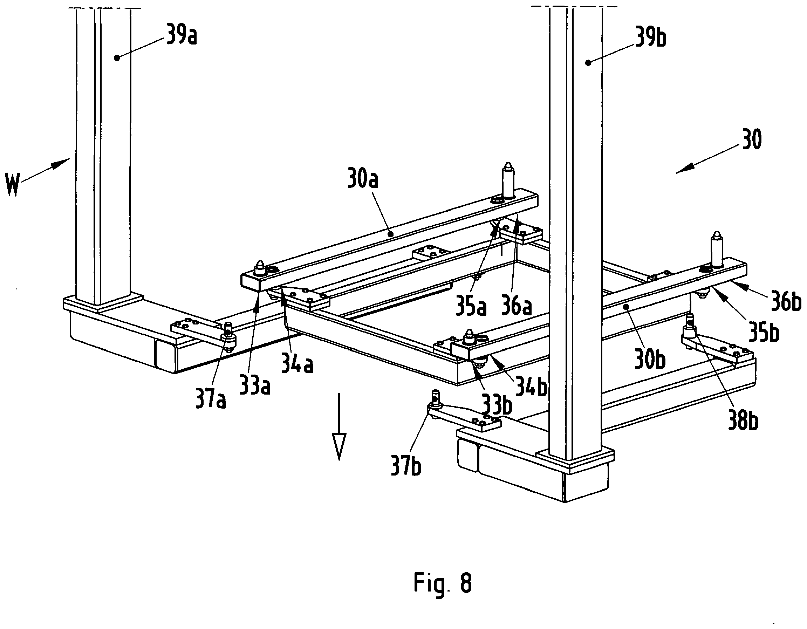

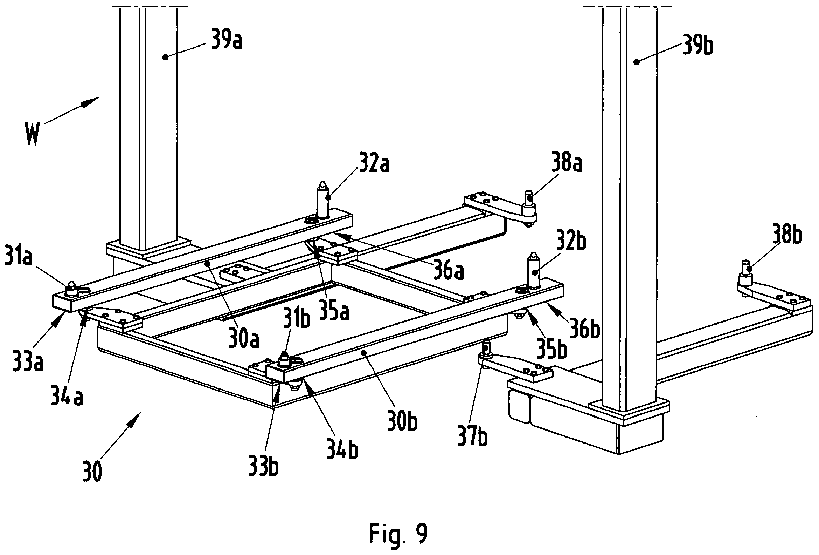

Die Fertigung ist dadurch gekennzeichnet, dass die Personenwagen bis zu einem definierten Bauzustand an einem räumlich entfernten Produktionsstandort vorgefertigt und per Transportmittel, vorzugsweise per Bahn, in einer geplanten Transportreihenfolge an einer Entladestation 2 der Fertigungslinie 1 angeliefert werden. Dabei ist es vorgesehen, dass die Personenwagen A in einem sogenannten Bauzustand 2P, also als lackierte Karosse A_{2P}, von einem ersten Produktionsstandort und die Personenwagen B in einem sogenannten Bauzustand 6P, also als Karosse mit Innenausstattung B_{6P}, von einem zweiten Produktionsstandort angeliefert werden. Die Entladestation 2 entlädt abwechselnd die Transportmittel, die entweder mit Karossen A_{2P} oder mit Karossen B_{6P} beladen sind, und setzt jede Karosse A_{2P} bzw. B_{6P} auf ein eigenes Gestell, einen sogenannten Skid. Dabei ist vorgesehen, dass jede Karosse A_{2P} und B_{6P} über einen Adapter auf dem Gestell G befestigt. Auf den Adapter wird in den Figuren 1 bis 4 nicht näher eingegangen. Dessen Aufbau und Funktionsweise wird anhand der Figuren 5 bis 9 erläutert.

Nach der Entladestation 2 wird jedes Gestell mit dem Adapter und einer Karosse A_{2P} bzw. B_{6P} über einen Vertikalförderer auf einer entsprechenden Fördertechnik in ein Entkopplungsmodul 3 transportiert.

Im Entkopplungsmodul 3 werden die Karossen A_{2P} in eine Montagelinie 4 eingespeist, die im Wesentlichen quer zum Entkopplungsmodul 3 und in einer anderen Ebene angeordnet ist. In der Montagelinie 4 werden in der die Karossen A_{2P} auf die Baustufe 6P gebracht. Für die Arbeiten innerhalb der Montagelinie 4 ist es notwendig, dass die Karossen A wahlweise auf Schubplatten und Elektrohängebahnen transportiert werden. Daher werden die Karossen A_{2P} zusammen mit ihrem jeweiligen Adapter bei Übergabe an die Montagelinie 4 von ihrem Gestell auf eine Schubplatte umgesetzt und mit einem ersten Vertikalförderer 5 in die andere Ebene abgesenkt. Bei Übergabe der vervollständigten Karossen A_{6P} aus der Montagelinie 4 zurück in das Entkopplungsmodul 3 werden diese zusammen mit ihrem Adapter von ihrer Schubplatte auf ein leeres Gestell umgesetzt und über einen zweiten Vertikalförderer 6 in die Ebene des Entkopplungsmoduls 3 angehoben, so dass Karossen A_{6P} die Montagelinie 4 in Richtung Entkopplungsmodul 3 verlassen.

Von dem Entkopplungsmodul 3 werden die Karossen A_{6P} und B_{6P} sequenziert, d.h. in einer geplanten Ausbringungsreihenfolge in eine Vorlaufstrecke 7 übergeben. Hier findet die Übergabe der auf dem Gestell abgestellten Karossen A_{6P} und B_{6P} wiederum zusammen mit dem Adapter auf die in der Endmontage 8 genutzten Elektrohängebahnen statt.

In der Endmontage 8 werden die Karossen A_{6P} und B_{6P} in ihre Baustufe 8P gebracht und verlassen als Karossen A_{8P} und B_{8P} die Fertigungslinie 1, wobei hierfür die Adapter von dem jeweiligen Personenwagen A bzw. B entfernt sein müssen.

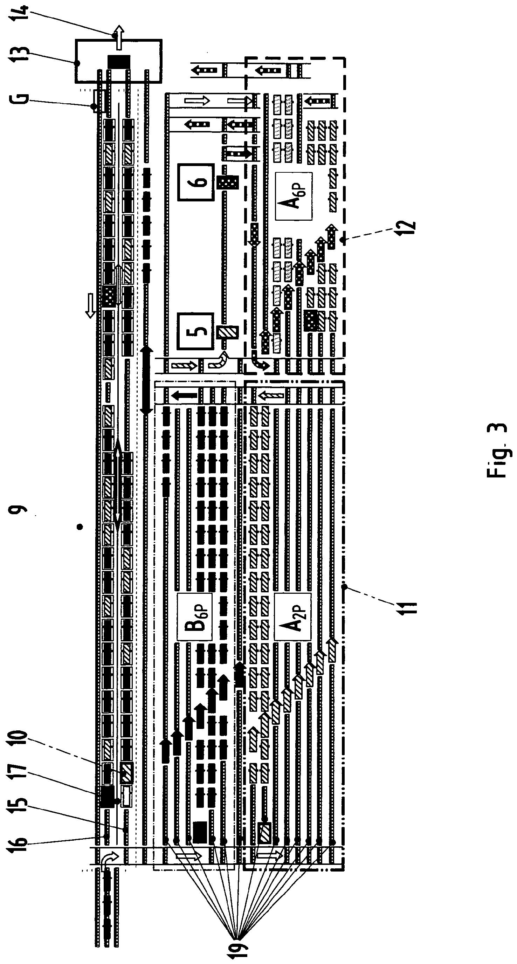

Aus Figur 3 geht das Entkopplungsmodul 3 hervor. Die Karossen A_{2P} sind dabei schräg schraffiert, die Karossen A_{6P} grau hinterlegt und die Karossen B_{6P} schwarz ausgefüllt dargestellt. Das Enkopplungsmodul 3 umfasst einen wahlfreien Speicher 9, der geeignet ist, Gestelle mit Karossen jeglicher Art (A_{2P}, A_{6P}, B_{6P}) aufzunehmen. Ferner ist ein Gassenspeicher 10 für Karossen B_{6P}, ein Gassenspeicher 11 für Karossen A_{2P} und ein Gassenspeicher 12 für Karossen A_{6P} vorgesehen. Die mit Bezugsziffer 13 bezeichnete Station dient zur Sequenzierung und zur Übergabe der Karossen A_{6P} und B_{6P} in die Vorlaufstrecke 7. D. h., hier werden die Karossen A_{6P} und B_{6P} in der Reihenfolge auf eine Förderstrecke 14 eingemischt, in der sie in der Endmontage 8 gefertigt werden sollen.

In dem wahlfreien Speicher 9 können die auf ihren Gestellen G gelagerten Karossen von jeder beliebigen Position auf zwei außenseitigen Schienen 15 und 16 auf eine mittlere Schiene 17 übersetzt und auf dieser hin- und her bewegt werden. So können die Gestelle G mit den Karossen beispielsweise direkt zur Sequenzierstation 13 oder zum Vertikalförderer 5 gefördert werden. D.h., auf jede der Karossen im wahlfreien Speicher 9 kann nach Bedarf zugegriffen werden, damit diese an eine beliebige Stelle in den Prozess eingeschleust wird.

Parallel hinter den Schienen 15, 16 und 17 des wahlfreien Speichers 9 verläuft eine Förderstrecke 18 zum Transport von mit Adaptern bestückten Gestellen G zurück zur Entladestation 2, wo sie jeweils erneut mit einer neu angekommenen Karosse bestückt werden können.

Der Gassenspeicher 10 ist mit sechs Speichergassen 19 versehen, in denen Karossen B_{6P} hintereinander in der Reihenfolge gelagert sind, in der sie planmäßig in die Endmontage 8 eingeschleust werden sollen. Der Gassenspeicher 11 nimmt die Karossen A_{2P} auf insgesamt neun Speichergassen 19 in der Reihenfolge auf, in der diese in die Montagelinie 4 eingeschleust werden sollen. Die Reihenfolge der Karossen A_{6P} in den acht Speichergassen 19 des Gassenspeichers 12 richtet sich wiederum nach der Reihenfolge mit der die Karossen in der Endmontage 8 mit den Karossen B_{6P} eingemischt werden sollen. Die in die Speichergassen 19 eingezeichneten Pfeile zeigen die vorgesehene Förderrichtung an.

Die Gassenspeicher 10, 11, 12, der wahlfreie Speicher 9 sowie die Sequenzierstation 13 sind durch quer verlaufende Förderstrecken 20 untereinander verbunden. Die in die Förderstrecken 20 eingezeichneten Pfeile zeigen die zulässige Transportrichtung.
Hinter der äußersten Speichergasse 18 des Gassenspeichers 10 ist eine Bypassförderstrecke 21 vorgesehen, auf der Karossen B_{6P} direkt von der Entladestation 2 in der gelieferten Reihenfolge zur Sequenzierstation 13 gefördert werden können.

Zwischen dem Gassenspeicher 12 und dem wahlfreien Speicher 9 sind die beiden Vertikalförderer 5 und 6 angeordnet, mit denen die Karossen A_{2P} vom Gassenspeicher 11 in die Montagelinie 4 ein- und von der Montagelinie 4 in den Gassenspeicher 12 als zugefertigte Karossen A_{6P} wieder ausgeschleust werden. Aus dem Gassenspeicher 12 gelangen die Karossen A_{6P} gemäß den eingezeichneten Pfeilen zur Sequenzierstation 13.

Mit dem dargestellten Entkopplungsmodul 3 lässt sich an der Sequenzierstation 13 aus den ankommenden Umfängen genau die Reihenfolge zusammenstellen, die bei der gemischten Fertigung der Karossen A_{6P} und B_{6P} in der Endmontage 8 benötigt wird.

Das Entkopplungsmodul 3 ist über die Sequenzierstation 13 mit der Vorlaufstrecke 7 verbunden. Die in der geplanten Ausbringungsreihenfolge auf einer an die Förderstrecke 14 anschließende Förderstrecke 22 geförderten Karossen A_{6P} und B_{6P} werden an einer Übergabestation 23 von ihrem jeweiligen Gestell G zusammen mit ihrem Adapter an einen Hängewagen W einer Elektrohängebahn 24 übergeben.

Unmittelbar neben der Übergabestation 23 ist eine Rückführstation 25 angeordnet. Von der Übergabestation 23 wird das gerade freigewordene Gestell G an die Rückführstation 25 übergeben. Dort wird von einem in der Endmontage 8 leergeräumten Hängewagen W, der nunmehr nur noch den Adapter des inzwischen auf seine in der Endmontage 8 eingebauten Räder gestellten Fahrzeugs trägt, der Adapter automatisch auf das freigewordene Gestell G übergeben. Dieses fährt dann zusammen mit dem darauf abgelegten Adapter auf der Förderstrecke 18 bis zur Entladestation 2 zurück. Die neu ankommenden Karossen A_{2P} bzw. B_{6P} werden in der Entladestation 2 unter Zwischenschaltung des Adapters auf die Gestelle G abgestellt.

Die Karossen A bzw. B werden also während des gesamten Fertigungsprozesses zusammen mit dem Adapter innerhalb der Fertigungslinie 1 transportiert, gefördert und übergeben bis das Fahrzeug von dem Hängewagen W auf seine Räder abgestellt wird. Hier verbleibt der Adapter solange am Hängewagen W bis dieser zur Rückführstation 25 gelangt. Durch das Übergeben des Adapters auf das soeben freigewordene Gestell G ist der Hängewagen W frei, eine Karosse A_{6P} oder B_{6P} mit dem jeweiligen Adapter zu übernehmen.

Der Aufbau und die Funktionsweise des Adapters wird im folgenden anhand der Figuren 5 bis 9 näher erläutert.

Da sich die Personenwagen A und B in ihrer Bodenanlage unterscheiden können, was sich insbesondere für die Position der Aufnahmepunkte auswirken kann, ist ein Adapter 30 vorgesehen, der über den gesamten Fertigungsprozess bis zu dem Punkt an den Karossen A bzw. B verbleibt, bis diese auf ihre Räder gestellt werden.

Der Adapter 30 umfasst zwei spiegelsymmetrisch zueinander ausgerichteten Adapterhälften 30a und 30b. Diese weisen an ihrer Oberseite jeweils zwei Dorne 31a und 32a bzw. 31b und 32b auf. Die Position der Dorne 31a, 31b und 32a, 32b richtet sich nach den Aufnahmepunkten an der Bodenanlage des Personenwagens A. Es kann vorgesehen sein, dass die Dorne 31a, 31b und 32a, 32b exzentrisch ausgebildet sind, wobei durch Verdrehen der Dorne 31 und 32 um ihre Längsachse eine Verriegelung an den Aufnahmepunkten erfolgt. Dieses Verdrehen kann automatisch erfolgen. Der Vorteil dieser Verriegelung liegt darin, dass die Karosse A in einem Hängewagen W zusätzlich um die Fahrzeuglängsachse verdreht werden kann, ohne dass ein Herausfallen möglich ist.

An seiner Unterseite ist jede Adapterhälfte 30a, 30b vorne mit jeweils zwei Eingriffsöffnungen 33a, 33b und 34a, 34b sowie hinten mit jeweils zwei Eingriffsöffnungen 35a, 35b und 36a, 36b versehen. Die Position dieser Eingriffsöffnungen richtet sich nach den eingreifenden Zapfen der jeweiligen Fördertechnik.

In dem dargestellten Ausführungsbeispiel sind die Eingriffsöffnungen 33a, 33b, 36a sowie 36b entsprechend der Zapfen 37a, 37b, 38a und 38b eines Hängewagens W, von dem lediglich die beiden Greifarme 39a und 39b dargestellt sind, der nicht näher dargestellten Elektrohängebahn angeordnet.

Die Eingriffsöffnungen 34a, 34b, 35a sowie 35b sind entsprechend der Zapfen 40a, 40b, 41a und 41b einer Schubplatte S an der Unterseite der Adapterhälften 30a und 30b positioniert.

Die Adapter für die Karossen B sind in dem beschriebenen Ausführungsbeispiel identisch mit den Adaptern 30 für die Karossen A, da die Aufnahmepunkte an den Karossen A und B identisch sind. Es ist jedoch auch denkbar, dass sich die Aufnahmepunkte der Karossen A von denen der Karosse B unterscheiden. In diesem Fall unterscheiden sich die Adapterhälften 30a und 30b lediglich dadurch, dass die Dorne für die Aufnahmepunkte entsprechend der Bodenanlage positioniert sind. Die Eingriffsöffnungen 33, 34, 35 und 36 für die Fördertechnik bleiben an der gleichen Position, so dass die Zapfen der Fördertechnik unabhängig von der jeweils aufgenommenen Karosse immer an der gleichen Position sind. Das hat den Vorteil, dass Karossen unterschiedlicher Modellreihen, d.h. mit unterschiedlichen Aufnahmepunkten an der Bodenanlage auf einer gemeinsamen Fertigungslinie 1 transportiert werden können. Außerdem kann durch die beiden vorderen Eingriffsöffnungen 33 und 34 sowie die beiden hinteren Eingriffsöffnungen 35 und 36 die Karosse von einer auf die andere Fördertechnik übergeben werden, ohne dass aufwendige Umsetzprozesse oder Umgreifprozeduren durchgeführt werden müssen.

Das vorteilhafte Umsetzen durch den Adapter 30 lässt sich am Beispiel eines Umsetzprozesses von einem Hängewagen einer Elektrohängebahn auf eine Schubplatte wie folgt zusammenfassen:
Der Hängewagen W wird in Pfeilrichtung Z auf die Schubplatte S abgesenkt und zwar so, dass sich die Zapfen 40a, 40b, 41a, 41b in Überdeckung mit den Eingriffsöffnungen 34a, 34b, 35a, 35b befindet. Sobald sich die Zapfen 40a, 40b, 41a, 41b in Eingriff mit den Eingriffsöffnungen 34a, 34b, 35a, 35b befinden, wird der Hängewagen noch soweit abgesenkt, dass sich die Zapfen 37a, 37b, 38a, 38b nicht mehr im Eingriff mit ihren korrespondierenden Eingriffsöffnungen 33a, 33b, 36a, 36b befinden. Die Schubplatte S kann mit dem aufgenommenen Adapter 30 respektive der nicht dargestellten Karosse A nunmehr gemäß Pfeilrichtung X nach vorne aus dem von den Greifarmen 39a, 39b aufgespannten Bereich weg bewegt werden.

Alternativ zu dem beschriebenen Umsetzen kann anstelle eines Absenkens des Hängewagens W die Schubplatte S entgegen Pfeilrichtung Z angehoben und der Hängewagen W in oder entgegen Pfeilrichtung X weg bewegt werden.

Ferner ist es nach dem gleichen Prinzip möglich, den Adapter 30 respektive die Karosse von der Schubplatte S auf einen Hängewagen W oder von dem Gestell G auf eine Schubplatte S und umgekehrt zu übergeben. Da der Adapter 30 immer vier freie Eingriffsöffnungen aufweist, auch wenn er von einer ersten Fördertechnik gehalten ist, kann die Karosse stets an eine zweite Fördertechnik übergeben werden, ohne dass die Karosse umgesetzt werden muss.

## Patentansprüche

1. Fertigungslinie zur Herstellung von Kraftfahrzeugen in einer geplanten Ausbringungsreihenfolge mit mindestens einer Entkopplungsstation und mindestens einem Zwischenspeicher zwischen den Fertigungsstationen, wobei wechselweise eine Vielzahl erste Karossen (A_{2P}, A_{6P}) und eine Vielzahl zweiter Karossen (B_{6P}) von einer Entladestation (2) oder einer Montagelinie (4) in ein Entkopplungsmodul (3) eingeschleust werden, in dem Gassenspeicher (10, 11, 12) vorgesehen sind, in denen die ersten und die zweiten Karossen (A_{2P}, A_{6P}, B_{6P}) voneinander getrennt in einer zur Ausbringungsreihenfolge korrespondierenden Montagereihenfolge zwischengepuffert sind, **dadurch gekennzeichnet, dass** erste Karossen (A_{2P}) von dem Entkopplungsmodul (3) in die Montagelinie (4) eingespeist werden, aus der die Karossen (A_{2P}) als Karossen (A_{6P}) in einer höheren Baustufe zurück in einen eigenen Gassenspeicher (12) gefördert werden.

2. Fertigungslinie nach Anspruch 1,
**dadurch gekennzeichnet,**
**dass** das Einspeisen in die Montagelinie (4) über einen Vertikalförderer (5) erfolgt, wobei sich die Montagelinie (4) in einer anderen Ebene befindet als das Entkopplungsmodul (3).

3. Fertigungslinie nach Anspruch 1 oder 2,
**dadurch gekennzeichnet,**
**dass** das Ausspeisen aus der Montagelinie (4) zurück in das Entkopplungsmodul (3) über einen Vertikalförderer (6) erfolgt.

4. Fertigungslinie nach einem oder mehreren der vorgenannten Ansprüche,
**dadurch gekennzeichnet,**
**dass** in dem Entkopplungsmodul (3) ein wahlfreier Speicher (9) vorgesehen ist, aus dem Karossen (A_{2P}, A_{6P}, B_{6P}) unabhängig von ihrer Einbringungsreihenfolge entnehmbar sind.

5. Fertigungslinie nach Anspruch 4,
**dadurch gekennzeichnet,**
**dass** der wahlfreie Speicher (9) zwei außenseitige Schienen (15, 16) umfasst, zwischen denen eine mittlere Schiene (17) verläuft, derart, dass die Karossen (A_{2P}, A_{6P}, B_{6P}) auf den zwei außenseitigen Schienen (15, 16) auf die mittlere Schiene (17) übersetzbar und auf dieser hin- und her bewegbar sind..

6. Fertigungslinie nach einem der vorgenannten Ansprüche,
**dadurch gekennzeichnet,**
**dass** eine Bypassförderstrecke vorgesehen ist, auf der Karossen (B_{6P}) direkt von der Entladestation (2) zur Endmontage (8) gefördert werden können.

7. Fertigungslinie nach einem der vorgenannten Ansprüche,
**dadurch gekennzeichnet,**
**dass** der Gassenspeicher (10, 11, 12) mehrere Speichergassen (18) umfasst, die durch quer verlaufende Förderstrecken (20) miteinander verbunden sind.

## Claims

1. Production line for the production of motor vehicles in a planned output sequence, comprising at least one decoupling station and at least one intermediate store between the production stations, wherein a multiplicity of first vehicle bodies (A_{2P}, A_{6P}) and a multiplicity of second vehicle bodies (B_{6P}) are introduced in an alternating manner from an unloading station (2) or an assembly line (4) into a decoupling module (3) in which lane stores (10, 11, 12) are provided, in which the first and the second vehicle bodies (A_{2P}, A_{6P}, B_{6P}) are temporarily stored separately from one another in an assembly sequence corresponding to the output sequence, **characterized in that** first vehicle bodies (A_{2P}) are fed from the decoupling module (3) into the assembly line (4), from which the vehicle bodies (A_{2P}) are conveyed back as vehicle bodies (A_{6P}) in a higher construction phase into a dedicated lane store (12).

2. Production line according to Claim 1, **characterized in that** the feeding into the assembly line (4) takes place via a vertical conveyor (5), wherein the assembly line (4) is located on a different level from the decoupling module (3).

3. Production line according to Claim 1 or 2, **characterized in that** the feeding out of the assembly line (4) back into the decoupling module (3) takes place via a vertical conveyor (6).

4. Production line according to one or more of the preceding claims, **characterized in that** the decoupling module (3) is provided with an optional store (9), from which vehicle bodies (A_{2P}, A_{6P}, B_{6P}) can be removed irrespective of their input sequence.

5. Production line according to Claim 4, **characterized in that** the optional store (9) comprises two outer rails (15, 16), between which a central rail (17) runs in such a manner that the vehicle bodies (A_{2P}, A_{6P}, B_{6P}) on the two outer rails (15, 16) are transferable onto the central rail (17) and are movable to and fro thereon.

6. Production line according to one of the preceding claims, **characterized in that** a bypass conveying section is provided, on which vehicle bodies (B_{6P}) can be conveyed directly from the unloading station (2) to the final assembly (8).

7. Production line according to one of the preceding claims, **characterized in that** the lane store (10, 11, 12) comprises a plurality of storage lanes (18) which are connected to one another by transversely running conveying sections (20).

## Revendications

1. Ligne de fabrication destinée à la production de véhicules automobiles dans un ordre de production planifié avec au moins une station de découplage et au moins un accumulateur intermédiaire entre les stations de fabrication, dans laquelle on introduit alternativement une multiplicité de premières caisses (A_{2P}, A_{6P}) et une multiplicité de secondes caisses (B_{6P}) depuis une station de déchargement (2) ou une ligne de montage (4) dans un module de découplage (3), dans lequel il est prévu des voies de réserve (10, 11, 12) dans lesquelles les premières et les secondes caisses (A_{2P}, A_{6P}, B_{6P}) sont stockées provisoirement séparément les unes des autres dans un ordre de montage correspondant à l'ordre de production, **caractérisée en ce que** des premières caisses (A_{2P}) sont chargées du module de découplage (3) dans la ligne de montage (4), à partir de laquelle les caisses (A_{2P}) sont rapportées en tant que caisses (A_{6P}) à un niveau de construction plus élevé dans une voie de réserve particulière (12).

2. Ligne de fabrication selon la revendication 1, **caractérisée en ce que** le chargement dans la ligne de montage (4) est effectué par l'intermédiaire d'un convoyeur vertical (5), dans laquelle la ligne de montage (4) se trouve dans un autre plan que le module de découplage (3).

3. Ligne de fabrication selon la revendication 1 ou 2, **caractérisée en ce que** le déchargement hors de la ligne de montage (4) en retour dans le module de découplage (3) est effectué par l'intermédiaire d'un convoyeur vertical (6) .

4. Ligne de fabrication selon une ou plusieurs des revendications précédentes, **caractérisée en ce qu'**il est prévu dans le module de découplage (3) un accumulateur non sélectif (9), dans lequel des caisses (A_{2P}, A_{6P}, B_{6P}) peuvent être prélevées indépendamment de leur ordre d'introduction.

5. Ligne de production selon la revendication 4, **caractérisée en ce que** l'accumulateur non sélectif (9) comprend deux rails externes (15, 16), entre lesquels s'étend un rail central (17), de telle manière que les caisses (A_{2P}, A_{6P}, B_{6P}) sur les deux rails externes (15, 16) puissent être transférées sur le rail central (17) et puissent être déplacées en va-et-vient sur celui-ci.

6. Ligne de fabrication selon l'une quelconque des revendications précédentes, **caractérisée en ce qu'**il est prévu une section de transport de contournement, sur laquelle des caisses (B_{6P}) peuvent être transportées directement de la station de déchargement (2) au montage final (8).

7. Ligne de fabrication selon l'une quelconque des revendications précédentes, **caractérisée en ce que** la voie de réserve (10, 11, 12) comprend plusieurs voies de stockage (18), qui sont reliées l'une à l'autre par des sections de transport s'étendant transversalement (20).
